# EUROPEAN PATENT APPLICATION

(11) **EP 3 139 516 A1**
(43) Date of publication of application: **08.03.2017**
(21) Application number: 15183723.4
(22) Date of filing: 03.09.2015
(51) Int. Cl.: H04B 7/185

(54) **APPARATUS AND METHOD FOR COMMUNICATIONS MANAGEMENT IN AN UAV**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Apparatus and method for management of communications in respect of a moving platform comprising at least one platform application and a plurality of systems/subsystems including a communications system for transmitting data received from said at least one platform application and receiving data from another node and being configured to effect wireless data communication thereof by means of one or more supported communications links, wherein said apparatus comprises a link analysis and selection module which is configured to:
- receive attribute data representative of platform movement and/or emissions control restrictions;
- determine (100, 102), using said attribute data, suitability of one or more communications links in respect of a communications requirement between said moving platform and another node;
- determine a quality metric (106) for each of a plurality of communications links determined to be suitable; and
- select one or more of said communications links based on said quality metrics.

## Description

This invention relates generally to an apparatus and method for communications and information management and, more particularly, but not necessarily exclusively, to an apparatus and method for management of wireless communications resources between a moving platform and at least one remote recipient.

There are many applications in which it is required to apply a level of management in respect of wireless communications resources and the management of information, particularly between a moving platform and one or more remote recipient(s), and maintain adequate wireless communications therebetween for safe operation of the moving platform and mission success.

For example, in the case of aerial vehicles and, more particularly, unmanned aerial vehicles (UAVs), there is an ongoing and stringent requirement to maintain an adequate communications link between the aerial vehicle and a ground station, for example, and unexpected loss or degradation of such a communication link can be catastrophic.

A UAS is composed of three main parts, the unmanned air vehicle (UAV), unmanned control station (UCS) and support systems of the UAS (for pre-mission planning). A UAS Mission System may be composed of the following functional components/subsystems: Mission Management, Communications, Vehicle Health, Navigation System, Airspace Integration, Payload and Power Management. Multiple, different dynamic in-mission planners may reside in one or more of the above-mentioned functional components/subsystems. In a typical UAV, a dynamic route planner generates a new route, in real time, when there is a change in the operational environment, e.g. severe weather, threat, or a change of circumstances, e.g. an emergency, or a dynamic manoeuvre plan is generated to avoid an airborne obstacle. The aim is thus to maintain safety and the survivability of the aircraft by determining a feasible route and/or manoeuvre in real time, while avoiding pop-up, static and dynamic obstacles, for example.

However, the operational environment of moving platforms, at least in some applications, can be particularly challenging from a communications perspective and platforms need to adapt and respond to unplanned events such as link degradation and/or failure, new operational constraints (e.g. dynamic EMCON), pop-up threat, modified orders and change in mission priorities. Links can be volatile and link quality can significantly change, without prior warning. The quality of a link can change dynamically, due to interference, jammers and weather, for example. As a result, the link can become degraded or the signal can be lost. Node/platform manoeuvre can also affect the quality of a link. As the node manoeuvres, the antenna associated with a data link/communications link will not always be optimally oriented with respect to another node/platform, and as a result the signal can be lost or adversely affected by aircraft orientation. In addition, node mobility can impact the quality of a link. As a node moves away from a given point, the signal weakens and eventually the node moves out of communications range relative to another node. It would, therefore, be desirable to provide an intelligent communications management system that is able to adapt and respond in real time (or near real time) to unplanned events, that may cause link degradation or failure, and provide a method whereby an alternate link can be selected in response to an event that would otherwise result in a loss of communications or an unacceptable degradation in link quality.

For example, a pilot (at a ground station) and an air vehicle may be communicating via SATCOM, when the on-board system detects an intruder and manoeuvres to avoid it. In doing so, the air vehicle cuts off its link to the satellite and the link between the air vehicle and the pilot is lost. Currently, there is no way to adapt to the current situation, i.e. to use another communications link, to keep the pilot in the loop. Therefore, the absence of situational awareness and communications from the unmanned aircraft makes it difficult for the pilot to discover what has happened to the aircraft or where it may be going. Furthermore, an unplanned event of this type can, in some circumstances, be catastrophic, unless communications can be maintained and at best re-established quickly if lost.

Also, a platform may be communicating via a specific communications link, when a pop-up threat is detected, which has the capability to intercept ongoing communications, thereby betraying the existence of the platform. Currently, there is no way to adapt to the current situation, i.e. to use another communications link, to maintain communications, without betraying the existence of the platform.

In particular, therefore, it would be desirable to provide a facility in respect of a communications management system to adapt and respond dynamically to unplanned events, which can only be assessed in real time. Further, it would be desirable to provide an intelligent communications management system that is able to dynamically select a communications link maintaining communications, without violating EMCON.

It is, therefore, an object of at least some aspects of the present invention to address at least one or more of these issues and, in accordance with a first aspect of the invention, there is provided apparatus for management of communications resources of a moving platform, said communications resources comprising a plurality of wireless communications links and a plurality of antennas associated therewith and configured to effect wireless data communication via an antenna, the apparatus comprising an antenna analysis and selection module configured to:
- identify a communications requirement between said moving platform and a recipient node;
- receive attribute data representative of movement of said platform and/or link performance and/or emissions control criteria associated with said moving platform and/or said recipient node, said attribute data including platform movement data comprising future known movement of said moving platform and/or future predicted movement of said moving platform and/or said recipient node;
- determine, using said attribute data, suitability of one or more antennas and/or aperture portion antennas for data transmission from said moving platform to said recipient node;
- determine a quality metric for each of said plurality of antennas/aperture portion antennas, said quality metric being indicative of a respective performance criterion, wherein said quality metric; and
select one or more of said suitable antennas/aperture portion antennas having a highest performance criterion, for said data transmission.

The apparatus may be configured to receive, during mission execution, attribute data representative of said platform movement and/or emissions control restrictions from a platform system/subsystem of said moving platform. The attribute data may comprise route and/or trajectory and/or manoeuvre data, and/or emissions control data.

In an exemplary embodiment of the present invention, the apparatus may be configured to receive, during a mission, attribute data representative of said platform movement, said attribute data comprising attitude and/or position data associated with said moving platform received from one or more systems and/or functions of said moving platform.

The quality metric may include a transmitter metric, and/or a cost and/or stability metric.

The apparatus may be configured to select one or more of said communications links based on one or more decision parameters, including one or a combination of latency, bandwidth, monetary cost and/or stability in respect of a network/link and/or other nodes in the vicinity of said platform.

Apparatus according to an exemplary embodiment of the invention may reside within a dynamic planning and management module of said moving platform, and may be configured to select one or more wireless transmitters based on said platform movement and/or said emissions control restrictions.

The apparatus may comprise a link selection function, a management function and a router function, wherein said management function is configured to receive a list of selected transmitters from said link selection function, formulate a routeing table using said received list and transmit said routeing table to said router function; and said router function is configured to route messages for transmission in accordance with said routeing table. Optionally, the router function may be communicably coupled, directly or indirectly, to one or more off-board routers associated with said moving platform.

The quality metric may include a transmitter metric, and the apparatus may be configured to calculate a transmitter metric in respect of each of said communications links determined to be suitable, derived from data representative of one or more prevailing situational and/or environmental conditions associated therewith. Optionally, the data representative of said one or more prevailing situational and/or environmental conditions includes, in respect of each of resource availability, resource preferences, policy, estimated and/or current network and communications link performance, emissions control restrictions, platform movement, operational mode, adversary profile and position, and communications requirements for said at least one platform application.

The quality metric may include a transmitter metric and the apparatus may be configured to calculate said transmitter metric in respect of a communications link by:
- determining transmitter availability and transmitter preference values in respect of a specified message or message flow; and
- determining an antenna intervisibility value in respect of one or more transmitters using data representative of attitude and/or position of said moving platform.

A communications link may comprise or include a transmitter having a plurality of antennas associated therewith and the apparatus may be configured to determine an antenna metric for each of said plurality of antennas for a transmitter and select a best transmitter - antenna pair based on their respective quality metric.

A communications link may comprise or include a transmitter that shares an aperture antenna and the apparatus may be configured to determine an antenna metric for each of a plurality of portions of said aperture antenna and select a best transmitter-portion of aperture antenna pair based on their respective quality metric.

Optionally, the quality metric includes a route metric, and said apparatus may be configured to calculate said route metric using data representative of bandwidth and/or latency of a network associated with a respective communications link or transmitter.

The attribute data may comprise one or more of past attributes, current attributes, future predicted attributes and a priori known attributes in respect of platform movement and/or emission control restrictions.

The apparatus may be further configured to (i) determine a change in operational mode of said moving platform; and/or (ii) receive real-time navigation data from a system/subsystem and/or function of said moving platform; and/or (iii) determine a change of transmitter/antenna availability and/or transmitter/antenna preference in respect of a communications link; and/or (iv) determine a change in emissions control conditions; and, in response thereto, re-determine the suitability of at least one communications link in respect of said moving platform.

In accordance with another aspect of the present invention, there is provided a management system for a moving platform comprising at least one platform application, a dynamic planner configured to generate a communications plan in respect of said moving platform, and a plurality of systems/subsystems including a communications system for transmitting data received from said at least one platform application and receiving data from another node and being configured to effect wireless data communication thereof by means of one or more supported communications links, the system further comprising a link analysis and selection module which is configured to:
- receive attribute data representative of platform movement and/or emissions control restrictions;
- determine, using said attribute data, suitability of one or more communications links in respect of a communications requirement between said moving platform and another node;
- determine a quality metric for each of a plurality of communications links determined to be suitable;
- select one or more of said communications links based on said quality metrics; and
- send data representative of said selected one or more communications links to a system/subsystem and/or function of said moving platform for implementation.

In accordance with yet another aspect of the present invention, there is provided a method for management of communications in respect of a moving platform comprising at least one platform application and a plurality of systems/subsystems including a communications system for transmitting data received from said at least one platform application and receiving data from another node and being configured to effect wireless data communication thereof by means of one or more supported communications links, the method comprising:
- receiving attribute data representative of platform movement and/or emissions control restrictions;
- determining, using said attribute data, suitability of one or more communications links in respect of a communications requirement between said moving platform and another node;
- determining a quality metric for each of a plurality of communications links determined to be suitable; and
- selecting one or more of said communications links based on said quality metrics.

These and other aspects of the present invention will be apparent from the following specific description in which embodiments of the present invention are described, by way of examples only, and with reference to the accompanying drawings, in which:
Figure 1 is a schematic block diagram illustrating a moving platform management system, including apparatus according to an exemplary embodiment of the present invention;
Figure 2 is a schematic block diagram illustrating some principal features of the moving platform management system of Figure 1 in more detail;
Figure 3A is a schematic block diagram illustrating the data connections of an intelligent communication management system, including apparatus according to an exemplary embodiment of the present invention, in an air-based system;
Figure 3B is a schematic block diagram illustrating the data connections of an intelligent communication management system, including apparatus according to an exemplary embodiment of the present invention, in a ground-based system/airborne control station;
Figure 4 is a schematic flow diagram illustrating the principal steps of a link analysis and selection method for use in an exemplary embodiment of the present invention;
Figure 5 is a schematic block diagram illustrating a communications management system including apparatus according to an exemplary embodiment of the present invention; and
Figure 6 is a schematic flow diagram illustrating the principal steps of a link analysis method for use in an exemplary embodiment of the present invention.

Exemplary embodiments of the present invention provide an intelligent communications management system configured to maintain adequate connectivity throughout a mission, taking into account unplanned events.

Traditionally, all aspects of communications, such as multiple, different communications links/radios, reside within the communications system (of an aircraft for example). Each of the communications links/radios is an independent system and usually dedicated to transmitting specific messages. If, for example, an unexpected event occurs, such as a link failure or degradation, change in mission priorities and new operational constraints, the system is unable to adapt and respond accordingly to maintain adequate communications. The communications system is usually a dedicated system without much interaction, if not all, with other platform systems and avionics applications on the platform. Furthermore, in some cases, a higher-level planner is required, which resides outside the communications system, to meet the changing demands of the platform and new operational constraints. In contrast, in aspects of the present invention, it is recognised that all functions/systems on a platform (e.g. mission management, communications, airspace integration, and vehicle health management) work in concert to achieve mission objectives and to maintain integrity of the platform. For example, the communications system may inform the platform health management system when a lost link situation arises to ensure that communications failure will not lead to a catastrophe. Thus, and as will be described in more detail later, the communications system is concerned with low-level decision making, i.e. day-to-day running and decisions. However, if it is unable to resolve a communications issue, for example, all available links to it have failed or severely degraded links, then higher-level planning is invoked. In one exemplary embodiment of the present invention, especially in the case of an unplanned platform manoeuvre, the apparatus may be configured to determine (using position and heading information for example) that a node manoeuvre has occurred and which will adversely affect communications on the current data link being used, and thus select another suitable data link for transmission. In another embodiment, the link selection approach uses a priori knowledge regarding platform future manoeuvre and selects the best link(s), for transmission of data, for the platform over some future interval of time.

The operational environment of a moving platform, in many different applications, comprises a plurality of nodes, both on the platform itself and a base station or other target platform. These nodes are configured to operate cooperatively to maintain situational/environmental awareness as well as exchange command and control data, and are, therefore, required to interact with each other as the platform is moving, so as to exchange platform management data and enable information, responsibilities and tasks to be shared. In general, a node has multiple data links/radios to enable it to interact with other nodes via different networks, as required.

In the following description of the drawings, a communications management apparatus according to an exemplary embodiment of the invention will be described in relation to a UAV. However, it is to be understood that the present invention is not necessarily intended to be limited in this regard and, indeed, finds application in many other types of moving platform management systems in which it is required to manage communications in an intelligent manner and, for the avoidance of doubt, this would include road and sea-going vehicles, as well as manned aerial vehicles.

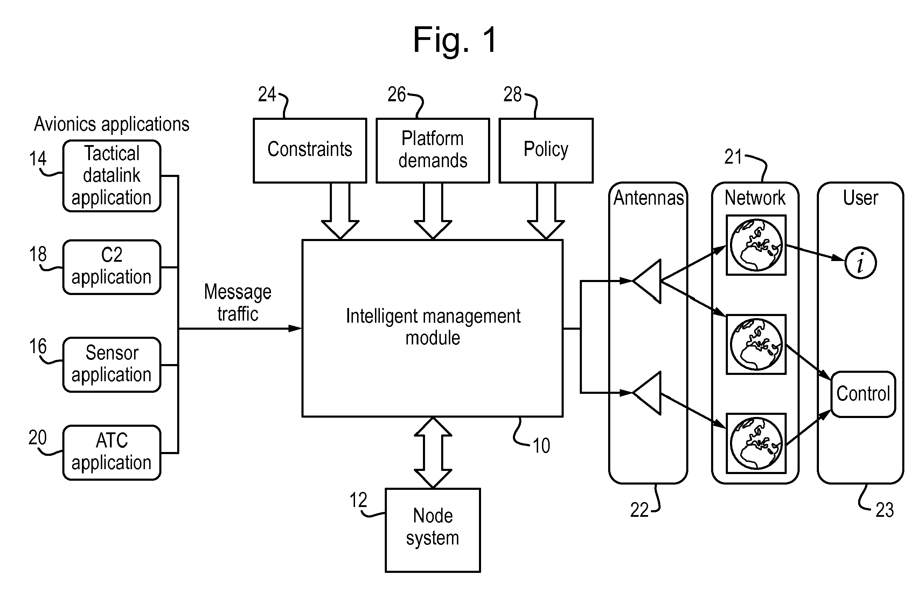

Referring to Figure 1 of the drawings, an intelligent management module 10, including apparatus according to an exemplary embodiment of an aspect of the present invention, is illustrated schematically at the centre of a typical UAV. The UAV comprises a plurality of nodes, wherein each node may comprise several functional components/systems, including communications, flight system, prognostics and health, etc. It can be seen from the diagram that two-way data communication is provided between the node system 12 and the intelligent management module 10. The node system 12 may comprise a plurality of functional components, possibly including, but not necessarily limited to, a prognostics and health functional component, a navigation system, a control authority, e.g. pilot or an on-board authority with executive decision functionality, a utilities management functional component, defensive aids functional component, data transfer and recording functional component, and an HMI (Human Machine Interface) functional component. Any and all of these functional components are configured to provide information, such as navigation data and detected threat, to the intelligent communications management module 10 for use in its decision making.

The intelligent communications management module 10 is also configured to receive data from a plurality of avionics applications. Such avionics applications may, for example, comprise civil and/or military applications, such as tactical datalink applications 14, sensor applications 16 (e.g. video, images), mission management applications 18 (for example, command and control data), and platform management applications 20 (e.g. health of node). It will be appreciated that this is not a comprehensive list of typical or possible applications from which the intelligent communications management system may receive data and others will be apparent to a person skilled in the art, depending upon the specific application within which the present invention is to be employed.

The intelligent communications management module 10 is configured to manage multiple communications links (generally depicted in Figure 1 as 'network' 21), which may include (but are not limited to) tactical data links, satellite links, free space optical links and other data links, as will be apparent to a person skilled in the art, and it may have different antenna types (depicted generally at 22) to manage including, but not limited to, omni-directional and directional antennas, shared aperture antenna, fixed or beam-steerable antennas. The antennas may be shared between links/radios, or with sensor systems. In the example illustrated in Figure 1, the communications from the platform antennas 22 are directed at an end user 23, for example, the remote pilot of a UAV located at a ground station. However, communications are not intended to be limited in this regard, and the type and receiver of communications managed by exemplary embodiments of the present invention may vary greatly, depending on application, system configuration and requirements.

Thus, the Intelligent Communications Management System has access to a wealth of information, such as mission environment and internal state of the node, and uses this information in its decision making. The environment represents the systems knowledge about the outside world, including network and link performance, other nodes in the network environment, dynamic threats, terrain, obstacles and weather data. The internal state is a representation of the internals of the system. It collects internal data from contributing sub-systems, such as real-time node attitude and position, current operational mode and applications' communications requirements, and it retains communications/information exchange plans, policies and information about installed resources (e.g. communications links, antennas).

A database (not shown) provides the intelligent communications management module 10 with knowledge about its mission environment and internal state, and uses this information in its decision making. The environmental data represents the system's knowledge about the outside world, including network and link performance, other nodes in the network environment, dynamic threats, terrain, obstacles and weather data. The internal state is a representation of the internal sub-systems of the system. The database collects internal data from contributing sub-systems, such as real-time node attitude and position, current operational mode and the communications requirements of individual applications, and it retains communications/information exchange plans, policies and information about installed resources (e.g. communication systems, antennas, etc). For example, the antenna gain patterns for each installed antenna on a node would be stored on each node, in a database for example, to be used by the intelligent communications management module 10 in respect of, for example, antenna selection. In this example, the antenna gain patterns are mapped with respect to the body reference frame of the node, i.e. location of the antenna on the node.

It will be appreciated that the term "database" used above, is used simply to define one or more repositories for the required data. In one exemplary embodiment, the database may be a single repository, provided on the intelligent management module 10 (or at least dedicated thereto) in which all of the aforementioned data is stored for use thereby. In other exemplary embodiments, such a single repository may be used to store only a sub-set of the data, such as policies and installed antenna performance, to be accessed as required, with data that changes dynamically during a flight or mission, such as node position and operational mode, being sent directly from a relevant part of the overall platform management system to the intelligent communications management module.

Also illustrated in Figure 1, are data inputs representative of constraints 24, platform demands, and policy 28. These factors and the manner in which data representative thereof can be obtained will be known to a person skilled in the art. The policy 28, for example, may be designed by the network designer. A copy of this policy may reside within the intelligent management module 10, or accessible thereby. The policy contains a set of rules that, for example, define how links and antennas can be used, what action to take in the event of a hardware fault and/or loss of signal, and how avionics applications can be served to support the mission. Such rules may be expressed as condition-action pairs (i.e. IF condition THEN action) and/or in look-up tables.

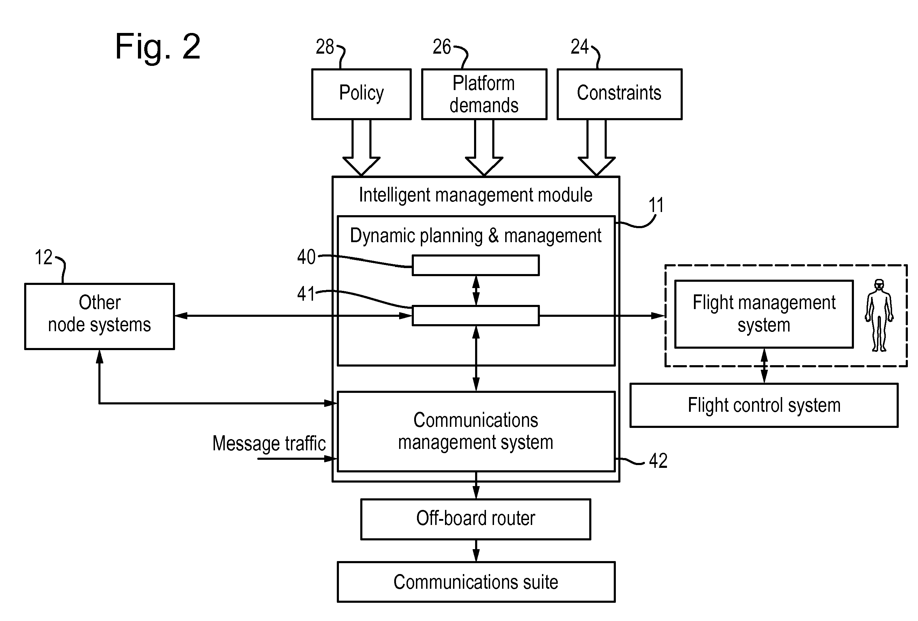

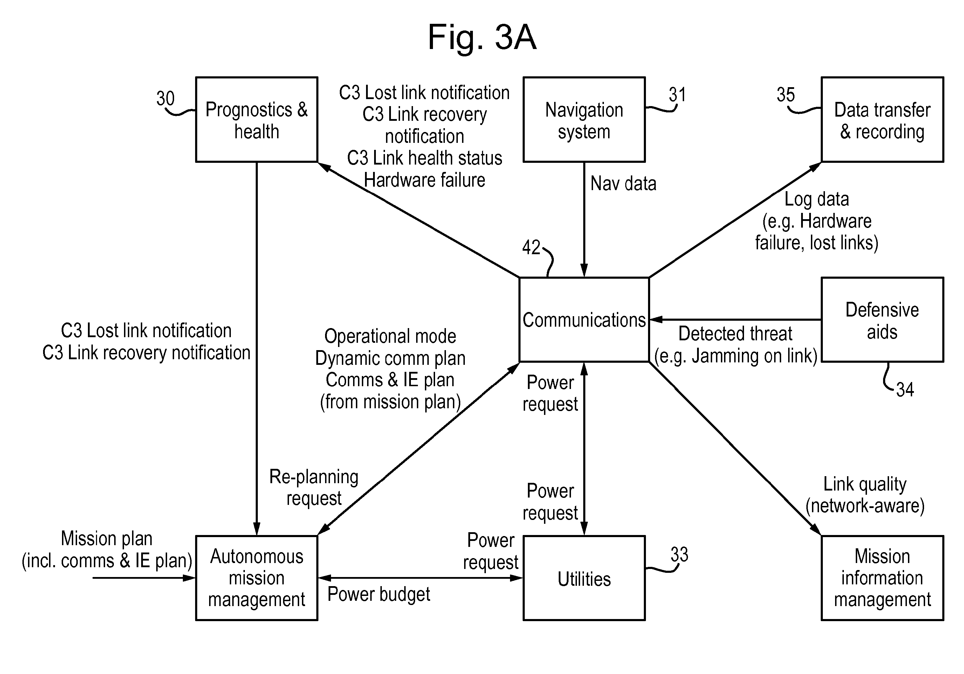

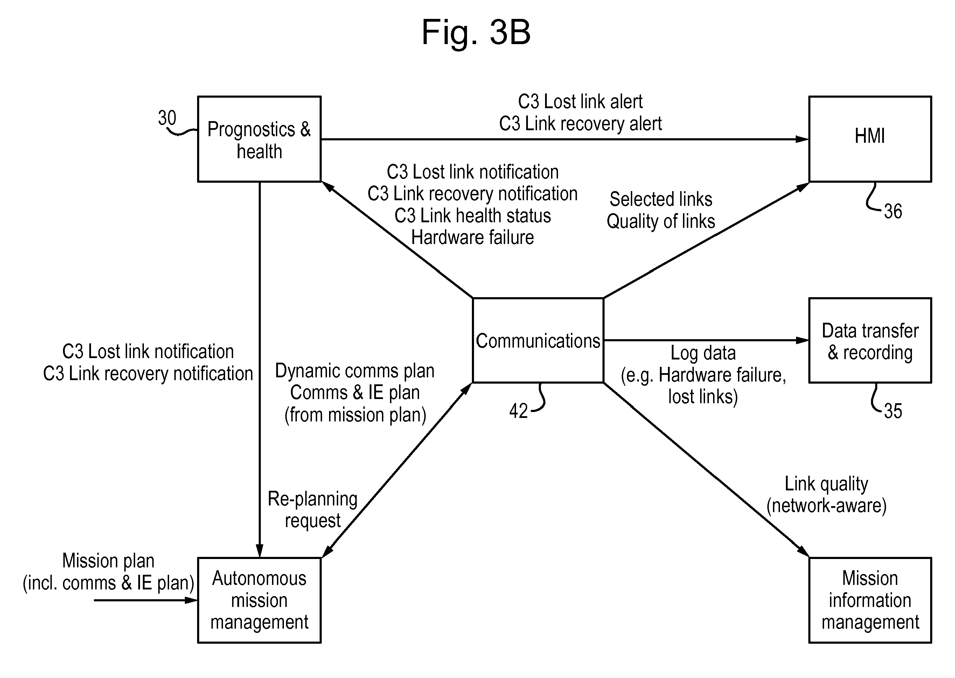

Thus, the Intelligent Communications Management System can be divided into two distinct parts with inputs and outputs to each other and other parts of the aircraft or ground-based system, as shown in Figure 2. These parts may reside in different parts of the aircraft or ground-based system, as shown in Figures 3A and 3B. Such an implementation is more applicable to Unmanned Air Systems (UAS). In another implementation, the different functions may reside in one box; this implementation may be appropriate for manned systems, such as a manned air vehicle.

Referring now to Figure 2 of the drawings, the intelligent management module 10 comprises a dynamic planning and management module 11 and a communications management system 42. The communications management system 42 is concerned with low-level decision making. When it is unable to resolve certain communications issues, it is configured to generate a request for the dynamic planning and management module 11 to modify plans in order to meet platform demands (i.e. higher-level planning).

In the example shown, the dynamic planning and management module 11 comprises a dynamic planner 40 and a manager 41, that provides an interface between the dynamic planner 40 and the communications management system 42, as will be described in more detail below.

In exemplary embodiments of the present invention (and as illustrated in Figures 2, 3A and 3B of the drawings), at least parts of the node system 12 are communicably coupled to the communications management system 42 and the intelligent communications management system 10 works cooperatively with the rest of the node functional components and their subsystems to achieve the mission goal: to provide information for situational awareness and safety purposes, and to receive information used in its decision making. Figures 3A and 3B depict schematically this interaction for air-based systems and ground-based systems/airborne control station respectively. As explained above, the node system 12 may comprise one or more of a prognostics and health functional component 30, a navigation system 31, a control authority 32, e.g. pilot node, a utilities management functional component 33, defensive aids functional component 34, data transfer and recording 35 functional component, and an HMI (Human Machine Interface) 36 functional component. As an example, the Health function within the UAV Communications function provides C3 health status updates to the node's Prognostics and Health function. If a C3 Lost Link is detected by the intelligent management system's Health function, it will send a C3 Lost Link alert message to Prognostics and Health function, for it to take the appropriate action; for a UAV, the Prognostics and Health function notifies Autonomous Mission Management of the C3 Lost Link, while for a UCS, it reports the C3 Lost Link to the HMI (intended for the pilot).

The intelligent communications management system 10 receives a large quantity of information from different parts of the platform, which it can use in its decision-making processes, as described in more detail below. It is consequently mission-, motion-, and network-aware and understands what resources it has to manage, as well as their performance capability. Mission-awareness provides information on what the platform is trying to achieve. There can be various operational modes, that might include normal operation, reconnaissance, under attack, attack, taxiing, landing, etc. This is common to the entire platform and is of particular concern to the communications module 42. The communications module 42 monitors and evaluates current network performance, so it is network-aware. Network awareness information may also be shared with the dynamic planning and management 11 for planning purposes. Motion-awareness enables communications module 42 to intelligently route information along the best path to ensure connectivity to a fixed and/or mobile node is maintained, for example, in response to an unexpected and possibly a sharp manoeuvre. The dynamic planning and management 11 is also motion-aware, in that it may receive a priori future route and/or manoeuvre plan in order to assess its impact on communications and to select suitable communications link(s), including antennas. The dynamic planning and management 11 is aware of other platform demands, such as emission demands. It is thus, mission-, network-, motion- and platform-aware, enabling the intelligent communications management system 10 to dynamically adapt and respond to unexpected events, e.g. change in mission priorities, mission environment and network conditions.

Referring back to Figure 2 of the drawings, dynamic planners are also widely known and used in many different applications. A dynamic planner is typically provided in respect of, for example, a UAV for planning its route/path, from a start point (typically, but not always) to a defined end point (and optionally including any defined waypoints therebetween), as well as planning its manoeuvre and/or trajectory. Known dynamic planners (path, manoeuvre and trajectory) tend to base their calculation on several factors, such as terrain, threat, weather, and platform constraints. For example, a manoeuvre may be calculated to avoid an airborne obstacle or a path calculated to avoid detection of the UAV. Other types of dynamic planners for route planning in many different applications will be known to a person skilled in the art and the present invention is not necessarily intended to be limited in this regard. However, in prior art systems, the need to perform dynamic communications management in respect of a platform movement and/or as part of platform protection to avoid detection, has not been considered.

In contrast, in this exemplary embodiment of the present invention, the management function 41 of the dynamic planning and management module 11 can interface with the dynamic planner 40, the communications management system 42 (for example, via a communications executive, as will be described in more detail below) and other parts of the node system 12. The management function 41 is, in this case, responsible for generating plan requests and providing attributes to the dynamic planner 40, evaluating new plans, selecting the best plan, requesting authorisation from the platform/pilot to execute the new plan (e.g. use a sensor system for communication purposes, manoeuvre a node), in order to optimise communications.

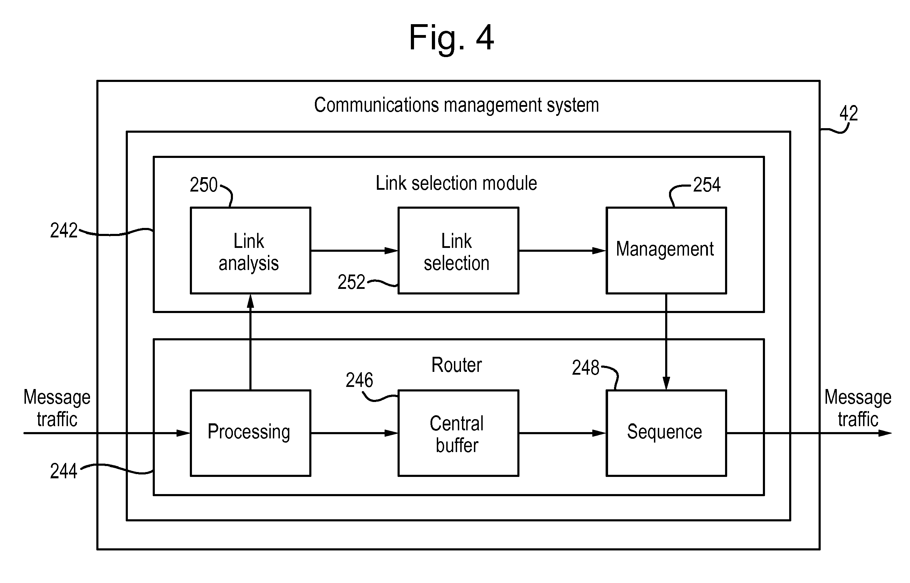

Referring to Figure 4 of the drawings, the link selection module comprises a link analysis function and a link selection function. Link analysis evaluates one or more communications links/radios on the platform, by considering a number of factors, such as resource availability, resource preference, policies, current network and link performance, platform movement, EMCON constraints and the communications requirements of the various applications, such as security, monetary cost, bandwidth and latency requirements. The link selection function then selects the best communications link. Once a link has been selected, data representative of the selected link is sent to a platform system or function for implementation.

In some exemplary embodiments, the link analysis evaluation may be performed based on *a priori* known attributes, such as manoeuvre, trajectory, position and attitude of the node(s). In another exemplary embodiment, the evaluation may be performed based on predicted attributes, such as manoeuvre, trajectory, position and attitude of the node(s). In yet another exemplary embodiment, the link analysis may be performed based on the current attributes and/or future predicted attributes.

In an exemplary embodiment, the link analysis function evaluates the suitability of a plurality of antennas on the platform for a given communications link; a communications link may have more than one antenna available to it, or it may be sharing an antenna aperture or a portion thereof with another platform system (e.g. sensor system).

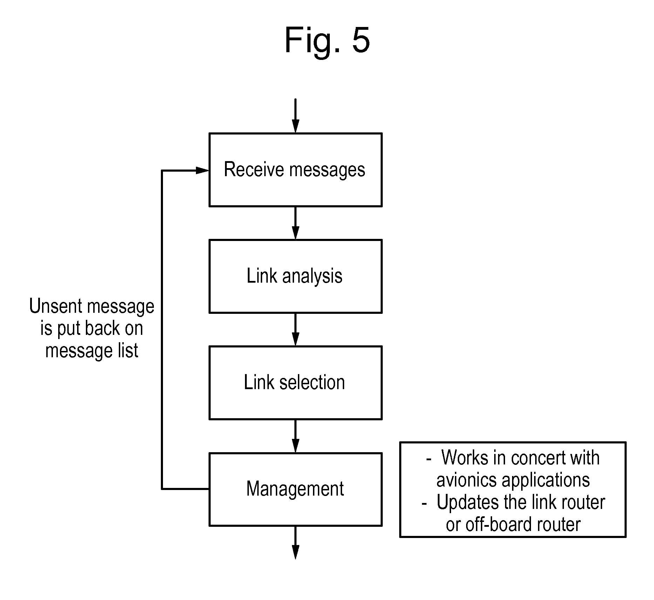

Referring to Figure 5 of the drawings, in one exemplary embodiment of the invention, the communications management system 42 (lower level planning) comprises a link selection module 242 and a router module 244. The link selection module consists of a link analysis, link selection and management functions. The router module consists of processing, central buffer and sequencing functions. At the Router module, messages are received at an inbound network interface, processed by the processing component and, possibly, stored in the buffering component. The messages are then forwarded by the sequencing component to the outbound interface that transmits the messages. The link selection module finds a suitable communications link for transmitting a message based on one or more factors, such as latency, throughput, monetary cost, security, resource availability and preference, and informs the router to route the message accordingly. If, for example, a change in attitude has been detected, i.e. a platform manoeuvre has occurred, a link analysis function 250 determines the suitability of one or more communications link for a given message or message flow; a link selection function 252 then selects the 'best' communications link to route a message based on the link analysis output; and a link management function 254 is responsible for informing the sequence component on how to route the messages. However, in the event that a communications link is severely degraded or lost as a result of a platform movement, for example, then higher planning is invoked.

The link analysis function determines the suitability of a communications link to successfully deliver a given message to a recipient, or support a defined message flow, by calculating a Transmitter Metric for each communications link. A monetary cost and stability metric may also be calculated, wherein the Stability Metric may consider the stability of the network/links and nodes, which can impact quality-of-service.

The link selection function uses link selection rules to select the best communications link, based on Transmitter Metric and it may also consider the monetary and/or stability metrics. Based on the link selection rules, more than one best communications link may be selected for the same message. Different messages or message flows, such as video and C2 data, may be routed via the same transmitter, if there is enough capacity to support both their bandwidth requirements. The function ensures that the sum of the messages do not exceed the capacity of the communications link. In addition, a message flow (or messages of the same type) may be divided between two or more transmitters based on the available capacity of the communications links, in accordance with their communications requirement (e.g. bandwidth, latency requirements).

In another exemplary embodiment, a link selection module may reside within higher-planning, for example: to plan the use of a sensor system for communications, which can only be done at a higher-level; to generate a communications plan based on received future platform movement; and to generate a communications plan as part of platform protection when operating under EMCON.

However, it will be appreciated, that the present invention is in no way intended to be limited as to the location within the overall platform system of the link selection module provided by exemplary embodiments of the present invention. For example, a link selection module could be provided as part of a higher-level planning element and/or within a message routeing function, which comprises a dynamic prioritisation module, as well as the link selection module and router module, as described above.

It will be appreciated by a person skilled in the art that the proposed link analysis may be employed equally effectively:
- during an initial planning phase, i.e. pre-mission planning, wherein the link analysis function may be used during the route and/or communications planning phase;
- during mission execution, when dynamic communications planning (higher-level planning) is performed, in relation to imposed EMCON and/or platform movement, whereby platform movement can be based on: (i) a priori known future platform manoeuvre and/or route and/or trajectory based on data representative thereof (e.g. attitude) received from the dynamic planner or human planner, and (ii) predicted future platform manoeuvre and/or trajectory and/or route; or
- during mission execution, when the communications management system (lower-level planning) is required to be performed in real (or near real) time, without warning, as a result of a platform movement, based on data representative of a platform movement, for example instantaneous manoeuvre data (e.g. current attitude), received from one or more platform systems.

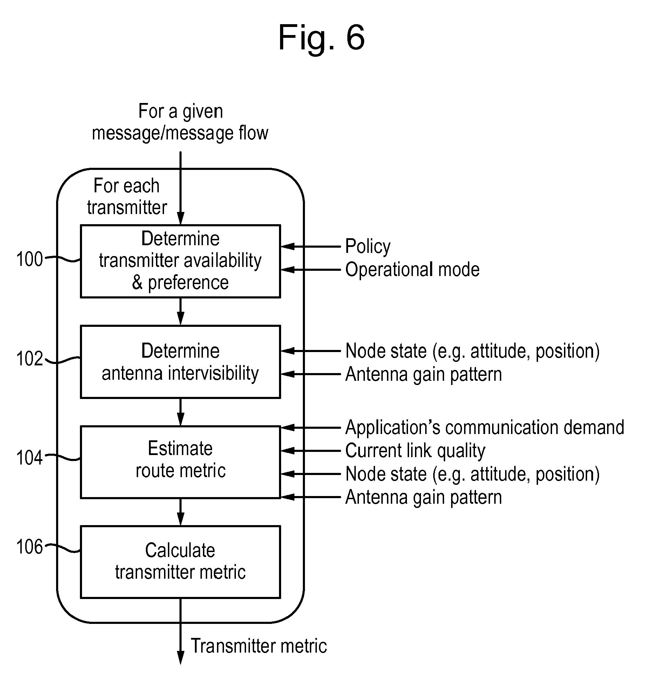

Referring to Figure 6 of the drawings, a flow chart illustrates schematically an exemplary implementation of the link analysis function. As explained above, the link analysis function in accordance with this exemplary embodiment of the present invention, determines the suitability of a communications link to successfully deliver a given message to a recipient, or support a defined message flow, by calculating a Transmitter Metric for each available communications link.

At step 100, the transmitter availability and transmitter preference for a given message or message flow is determined using a look-up table and/or data inputs representative of policy and operational mode of the node, for example. The availability represents whether a transmitter is available for communications e.g. in good working order or not. The preference represents the preference of using a transmitter for communications. Next, at step 102, antenna intervisibility (i.e. the degree of visibility between the transmitting and receiving antennas defining a communications link) is determined using data inputs representative of node state (e.g. attitude and position) and respective antenna gain patterns.

At step 104, the method determines how 'good' a route is, for different QoS parameters between source and destination for a given communications link. This step estimates a Route Metric representative of how 'good' the route is for delivering messages based on factors such as bandwidth and latency. The route metric estimation considers the mission environment, antenna position and orientation, and network and link performance, as well as the impact of node movement on the quality of the link. Link performance can be based on sensed and/or estimated link performance.

At step 106, the method determines how 'good' the communications link is to deliver a message by calculating a Transmitter Metric, which may be calculated, for example, by multiplying the Transmitter Availability (step 100), Transmitter Preference (step 100), Antenna Visibility (step 102) and Route Metric (step 104). In some exemplary embodiments, a monetary cost and stability metric may also be calculated, as referenced above. In some other exemplary embodiments, the Transmitter metric is based on current platform attributes and future predicted attributes, such as position, trajectory and manoeuvre.

In another exemplary implementation of the link analysis function, wherein a communications link has more than one antenna associated with it, as above, the link analysis function determines the suitability of a communications link to successfully deliver a given message to a recipient, or support a defined message flow, by also assessing the suitability of each of its antennas in terms of availability and preference. In yet another implementation, a communications link shares an antenna, also known as a shared aperture antenna, with other systems, such as RADAR, ESM and Navigation, for example. Furthermore, the shared aperture antenna may be composed of multiple portions, for each of the communications system, RADAR etc. Hence, the link analysis function will also assess the suitability of the aperture antenna or each of the portions of the aperture in terms of availability, compatibility and preference.

The availability represents whether an antenna is available for communications e.g. in good working order or not. The preference represents the preference of using an antenna for communications. For example, the preference for using a communications antenna is assigned a 10-value, while the preference for using a RADAR antenna is assigned a 5-value. The compatibility determines whether the antenna can support the waveform needed to transmit or receive a signal (e.g. cannot use a 5GHz antenna to transmit a signal operating at 1GHz). The availability, compatibility and preference can be determined using a look-up table.

The link analysis function in accordance with another exemplary embodiment of the present invention, determines the suitability of a communications link for transmission whilst adhering to EMCON, by calculating a Transmitter Metric for each of the available communications links. In one implementation, higher-level planning is responsible for determining suitable communications link(s) that can be used in response to dynamic EMCON. The suitability of the communications links is based on a number of factors, such as resource availability, resource preference, policy, EMCON constraint, adversary profile (e.g. interception capability), and position of platform and adversary. Based on link analysis, the link selection function then selects the best communications link(s) that adhere to EMCON. Once a link(s) has been selected, data representative of the selected link(s) is sent to a platform system or function for implementation. Note: the selection does not mean that the communications link will be suitable to route a message in an expedient fashion to the destination, for example in terms of throughput or latency. The path from the node to the recipient will need to be assessed in terms of link and network performance, and the application's communications requirements in order to deliver a message. This step may be performed by a lower-level planning function, such as the communications system.

The link selection method described above may be applied in one or more of the following circumstances:
- in one exemplary embodiment, the link selection function is configured to use *a priori* knowledge regarding the platform's future flight trajectory and/or route. Thus, the link selection function may be coupled to the platform's dynamic planner, such as route or trajectory planner. The trajectory and/or route plan is received *a priori,* and the above-described method is used to select the best link(s) for the aircraft over some future time interval;
- alternatively, or in addition, the link selection function may be configured to use *a priori* knowledge regarding the platform's future flight manoeuvre (e.g. heading). For example, in one exemplary embodiment, the link selection function may be coupled to the platform's dynamic planner, which plans the heading that the aircraft will take. A manoeuvre plan is received *a priori,* and the above-described method is used to select the best link(s) for the aircraft over some future time interval. An example of a manoeuvre plan might be a so-called sense and avoid plan for avoiding unexpected obstacles.
- alternatively, or in addition, the link selection function may be configured to use instantaneous knowledge regarding the platform's current manoeuvre (e.g. heading, banking). For example, in one exemplary embodiment, the link selection module may be coupled to a platform system, such as navigation system or vehicle control system, to receive data representative of current attitude attributes corresponding to current platform manoeuvres.

It will be apparent to a person skilled in the art, from the foregoing description, that modifications and variations can be made to the described embodiments without departing from the scope of the present invention as defined by the appended claims.

## Claims

1. Apparatus for management of communications in respect of a moving platform comprising at least one platform application and a plurality of systems/subsystems including a communications system for transmitting data received from said at least one platform application and receiving data from another node and being configured to effect wireless data communication thereof by means of one or more supported communications links, wherein said apparatus comprises a link analysis and selection module which is configured to:
- receive attribute data representative of platform movement and/or emissions control restrictions;
- determine, using said attribute data, suitability of one or more communications links in respect of a communications requirement between said moving platform and another node;
- determine a quality metric for each of a plurality of communications links determined to be suitable; and
- select one or more of said communications links based on said quality metrics.

2. Apparatus according to claim 1, configured to receive, during mission execution, attribute data representative of said platform movement and/or emissions control restrictions from a platform system/subsystem of said moving platform.

3. Apparatus according to claim 2, wherein said attribute data comprises route and/or trajectory and/or manoeuvre data, and/or emissions control data.

4. Apparatus according to any of the preceding claims, configured to receive, during a mission, attribute data representative of said platform movement, said attribute data comprising attitude and/or position data associated with said moving platform received from one or more systems and/or functions of said moving platform.

5. Apparatus according to any of the preceding claims, wherein said quality metric includes a transmitter metric, and/or a cost and/or stability metric.

6. Apparatus according to any of the preceding claims, residing within a dynamic planning and management module of said moving platform, and configured to select one or more wireless transmitters based on said platform movement and/or said emissions control restrictions.

7. Apparatus according to any of the preceding claims comprising a link selection function, a management function and a router function, wherein said management function is configured to receive a list of selected transmitters from said link selection function, formulate a routeing table using said received list and transmit said routeing table to said router function; and said router function is configured to route messages for transmission in accordance with said routeing table.

8. Apparatus according to any of the preceding claims, wherein said quality metric includes a transmitter metric, and said apparatus is configured to calculate a transmitter metric in respect of each of said communications links determined to be suitable, derived from data representative of one or more prevailing situational and/or environmental conditions associated therewith.

9. Apparatus according to any of the preceding claims, wherein said quality metric includes a transmitter metric and the apparatus is configured to calculate said transmitter metric in respect of a communications link by:
- determining transmitter availability and transmitter preference values in respect of a specified message or message flow; and
- determining an antenna intervisibility value in respect of one or more transmitters using data representative of attitude and/or position of said moving platform.

10. Apparatus according to any of the preceding claims, wherein a communications link comprises or includes a transmitter having a plurality of antennas associated therewith and the apparatus is configured to determine an antenna metric for each of said plurality of antennas for a transmitter and select a best transmitter - antenna pair based on their respective quality metric.

11. Apparatus according to any of the preceding claims, wherein a communications link comprises or includes a transmitter that shares an aperture antenna and the apparatus is configured to determine an antenna metric for each of a plurality of portions of said aperture antenna and select a best transmitter-portion of aperture antenna pair based on their respective quality metric.

12. Apparatus according to any of the preceding claims, wherein said quality metric includes a route metric, and said apparatus is configured to calculate said route metric using data representative of bandwidth and/or latency of a network associated with a respective communications link or transmitter.

13. Apparatus according to any of the preceding claims, configured to (i) determine a change in operational mode of said moving platform; and/or (ii) receive real-time navigation data from a system/subsystem and/or function of said moving platform; and/or (iii) determine a change of transmitter/antenna availability and/or transmitter/antenna preference in respect of a communications link; and/or (iv) determine a change in emissions control conditions; and, in response thereto, re-determine the suitability of at least one communications link in respect of said moving platform.

14. A management system for a moving platform comprising at least one platform application, a dynamic planner configured to generate a communications plan in respect of said moving platform, and a plurality of systems/subsystems including a communications system for transmitting data received from said at least one platform application and receiving data from another node and being configured to effect wireless data communication thereof by means of one or more supported communications links, the system further comprising a link analysis and selection module which is configured to:
- receive attribute data representative of platform movement and/or emissions control restrictions;
- determine, using said attribute data, suitability of one or more communications links in respect of a communications requirement between said moving platform and another node;
- determine a quality metric for each of a plurality of communications links determined to be suitable;
- select one or more of said communications links based on said quality metrics; and
- send data representative of said selected one or more communications links to a system/subsystem and/or function of said moving platform for implementation.

15. A method for management of communications in respect of a moving platform comprising at least one platform application and a plurality of systems/subsystems including a communications system for transmitting data received from said at least one platform application and receiving data from another node and being configured to effect wireless data communication thereof by means of one or more supported communications links, the method comprising:
- receiving attribute data representative of platform movement and/or emissions control restrictions;
- determining, using said attribute data, suitability of one or more communications links in respect of a communications requirement between said moving platform and another node;
- determining a quality metric for each of a plurality of communications links determined to be suitable; and
- selecting one or more of said communications links based on said quality metrics.
